# EUROPÄISCHE PATENTSCHRIFT

(11) **EP 3 519 621 B1**
(45) Veröffentlichungstag und Bekanntmachung des Hinweises auf die Patenterteilung: **21.02.2024**
(21) Anmeldenummer: 17742415.7
(22) Anmeldetag: 17.07.2017
(51) Int. Cl.: D06N 3/00, B32B 5/02, B32B 5/14, B32B 5/18, B32B 5/20, B32B 5/22, B32B 5/24, B32B 5/32, B32B 7/02, B32B 9/02, B32B 27/18, B32B 27/20, B32B 27/30, B32B 27/40, B32B 3/02, B32B 3/26, B32B 3/30, D06N 3/14

(54) **ATMUNGSAKTIVE MEHRSCHICHTVERBUNDFOLIE UND VERFAHREN ZU IHRER HERSTELLUNG**
BREATHABLE MULTILAYER COMPOSITE FILM AND METHOD FOR THE PRODUCTION THEREOF
FEUILLE COMPOSITE MULTICOUCHE RESPIRANTE ET SON PROCÉDÉ DE FABRICATION

(30) Priorität: 27.09.2016 DE 102016218548
(43) Veröffentlichungstag der Anmeldung: 07.08.2019
(73) Patentinhaber: Benecke-Kaliko AG, 30419 Hannover (DE)
(72) Erfinder: GERKEN, Andreas, 30161 Hannover (DE); PRÖMPERS, Günter Leo, 30827 Garbsen (DE); BARGIEL,Lothar, 73066 Uhingen (DE)
(74) Vertreter: Continental Corporation
(86) Internationale Anmeldenummer: PCT/EP2017/067956
(87) Internationale Veröffentlichungsnummer: WO 2018/059769

(56) Entgegenhaltungen:
- EP-A1- 1 887 128
- EP-A2- 1 279 762
- DE-U1- 20 117 724
- GB-A- 2 114 585
- US-A- 4 122 223
- DATABASE WPI Week 201512 Thomson Scientific, London, GB; AN 2015-10653G XP002774785, & WO 2015/013961 A1 (ZHEJIANG PIYI TEXTILE CO LTD) 5. Februar 2015 (2015-02-05)

## Beschreibung

Die Erfindung betrifft eine atmungsaktive Mehrschichtverbundfolie, die folgende Schichten aufweist
a. eine mit einer Struktur oder Narbung versehene Außenschicht, die Erhebungen bzw. Narbkuppen und Vertiefungen bzw. Narbtäler aufweist,
b. mindestens eine darunterliegende luft- und wasserdampfdurchlässige Schaumschicht mit einer offenzelligen Schaumstruktur,
c. eine unter der Schaumschicht angeordnete luft- und wasserdampfdurchlässige Trägerschicht, vorzugsweise eine Textilschicht, ein Leder oder Kunstlederschicht,
sowie ggf. weitere innerhalb des Schichtverbundes angeordnete luft- und wasserdampfdurchlässige Schichten, wobei die mit Erhebungen bzw. Narbkuppen und Vertiefungen bzw. Narbtälern versehene Außenschicht im Bereich ihrer Vertiefungen bzw. Narbtäler (4) eine Schichtdicke von maximal 10 µm aufweist.

Ebenfalls offenbart ist ein besonders geeignetes Verfahren zur Herstellung der erfindungsgemäßen Mehrschichtverbundfolie im Rahmen eines Umkehr- oder Transferbeschichtungsverfahrens.

Der Begriff "atmungsaktive Folie" bezeichnet hier eine Folie, die luftdurchlässig und wasserdampfdurchlässig ist, jedoch gegenüber Flüssigkeiten undurchlässig ist.

Insbesondere für Möbel, etwa für Sitze und Liegen sowie für andere Gegenstände in Kontakt mit der menschlichen Haut sind heute atmungsaktive Kunstleder gefragt, die in der Lage sind, durch Abfuhr von Feuchtigkeit und Bereitstellen einer angenehmen Temperatur mindestens einen solchen Sitzkomfort bereitzustellen, wie er gewöhnlich von natürlichen Materialien bekannt ist. Insbesondere die Atmungsaktivität und die Wasserdampfdurchlässigkeit zur Abfuhr von Hautfeuchtigkeit sind die entscheidenden Kriterien für die subjektiv empfundene Güte und das "angenehme Empfinden" eines Bezuges, d.h. einer Kontaktfläche zur Haut.

In der Regel verwendet man hier mehrschichtige Folien, die üblicherweise aus einer oberen / äußeren Schicht aus einem Textilstoff, einem Kunststoff, Kunstleder, Gewebe, Leder oder ähnlichem flächigen Material bestehen und einer oder mehreren darunter liegenden Trägerschichten, z.B. Kunststoffschäumen oder textilen Trägermaterialien aufweisen.

Atmungsaktive Kunstleder eignen sich demzufolge gerade auch für die Verwendung im Kfz-Innenbereich, beispielsweise als Sitzbezug, da hier während längerer Fahrten ohne Bewegungsmöglichkeit eine gute Klimatisierung der Grenzschicht zwischen Haut und Sitzbezug erforderlich ist.

Während bei den üblicherweise mehrschichtigen Bezugsmaterialien die oft eingesetzten Trägerschichten aus textilem Flächenmaterial sowie die für die Zwischenschichten eingesetzten Polyurethanschäume von sich aus eine gewisse Offenporigkeit mit sich bringen, gestaltet sich die Ausbildung einer porösen Deckschicht auf Basis z. B. eines Polyvinylchlorids oder eines Polyurethans bislang schwierig. So neigen z.B. Polyurethandispersionen, die im Umkehrverfahren auf einem Hilfsträger aufgebracht werden, bei ihrer Trocknung/Verfestigung zur Ausbildung eines geschlossenen Films, der natürlich keine Poren aufweist. Demzufolge müssen, um eine einigermaßen zufriedenstellende Atmungsaktivität oder Durchlüftung bereitzustellen, in einem aufwendigen weiteren Arbeitsgang, etwa durch Nadelung oder Verstreckung nachträglich Poren in die Deckschicht eingebracht werden. Beides beeinflusst aber den optischen Eindruck.

Allgemein werden als Sitzpolstermaterialien häufig Textilien, Anilinleder und Mikrofaserkunstleder eingesetzt, die aufgrund einer guten Durchlässigkeit gegenüber Schweiß oder Wasserdampf ein gutes Sitzkomfortgefühl bieten. Diese können aber bei Verschmutzung aber nur schlecht gereinigt werden und sind gegenüber Abriebbelastungen, wie sie gewöhnlicher Weise bei einem Sitz oder Sitzmöbel auftreten, nur wenig widerstandsfähig und die sichtbare Oberfläche ändert sich häufig schon in negativer Weise nach kurzem Gebrauch (Verfärbungen, Aufglänzen, Verschmutzungen). Zudem können Flüssigkeiten ungehindert in diese Materialen eindringen.

Um eine widerstandsfähige, leicht zu reinigende Sitzmaterialoberfläche einsetzen zu können, werden in der Regel oberflächenstrukturierte, d.h. genarbte und mit Kunststoffen beschichtete Leder, Lederimitate oder Kunstleder eingesetzt. Letztere sind in der Regel flächige Textilien, die mit mindestens einer flächigen Kunststofflage verbunden sind. Diese Materialien sind gegenüber Flüssigkeiten undurchlässig, aber nachteiliger Weise auch gegenüber Wasserdampf und Schweiß.

Um eine Wasserdampfdurchlässigkeit in Ledern und Lederimitaten zu erreichen, werden unterschiedliche Ansätze verfolgt. So ist es für Einsätze in Fahrzeugen beispielsweise üblich, eine sichtbare Perforation mit Löchern in der Größe von ca. 0,5 - 2 mm einzustanzen, durch die über versteckte Ventilatoren Feuchtigkeit abgeführt und ein Luftstrom durch die Folie geführt werden kann. Nachteilig sind dabei eine aufwändige Sitzkonstruktion durch die Ventilatoren, der Stromverbrauch durch die Ventilatoren und die Störung des harmonischen Oberflächendesigns durch die sichtbaren Löcher. Zudem können Flüssigkeiten und schwer entfernbare Schmutzpartikel in die Löcher eindringen.

Weiterhin ist es auch möglich, eine sogenannte Mikroperforation zu verwenden, bei der mit optional beheizten Nadelwalzen oder Stanzwerkzeugen so kleine Perforationslöcher erzeugt werden, die mit bloßem Auge nicht sichtbar sind. Solche Konstruktionen können eine deutlich erhöhte Wasserdampf- und Luftdurchlässigkeit bei gleichzeitiger Undurchlässigkeit für Flüssigkeiten erzeugen. Nachteilig ist aber dabei, dass bei Verwendung von polymeren Materialien wie beispielsweise PVC insbesondere während einer Wärmebelastung oberhalb der Raumtemperatur ein Fließen der Polymere auftritt, wodurch sich die durch die Mikroperforation erzeugten Kanäle zu mindestens teilweise wieder verschließen und der Effekt der erhöhten Atmungsaktivität sich wieder verringert oder verschwindet. Zudem werden häufig einzelne Fäden des Trägertextils durch die Perforationsnadeln in die erzeugten Löcher gezogen und sind auf der Oberfläche sichtbar. Ein weiterer Nachteil ist auch, dass trotz der Mikroperforation einzelne Löcher sichtbar sein können, was insbesondere bei sehr hohen Anforderungen an das optische Erscheinungsbild der Oberfläche wie bei automobilen Anwendungen kritisch ist.

Generell sind Verfahren zum Auftragen einer Kunststoffschichten auf ein Trägermaterial in vielerlei Ausführungen bekannt. So kann in den so genannten Direktverfahren die äußere Schicht kann z.B. als Feststoff oder Flüssigkeit aufgetragen werden. Im ersten Fall werden vorgefertigte Folien, auch Schaumfolien, mittels Kleber oder auch durch Anschmelzen mit der Trägerschicht dauerhaft verbunden. Diesen Vorgang wird als Kaschierung oder Laminierung bezeichnet. Eine weitere Möglichkeit ist das Einstreuen von schmelzbaren, pulverisierten Kunststoffen (Thermoplasten) auf die Trägerschicht und anschließendes Aufschmelzen und Verdichten mittels heißer Walzen, die den Kunststoff gegen das Trägermaterial pressen. Solche Thermoplaste können auch mittels Extrusion oder über Kalander/Kalanderwalzwerke aufgeschmolzen und direkt auf die Trägerschicht aufgetragen und angepresst werden. Das Auftragen erfolgt durch Tauchen, Rakeln, Walzenauftrag, Druck oder Spritzverfahren. Im jedem Fall ist Trocknung bei höheren Temperaturen über mehrere Minuten notwendig, um die Beschichtung entsprechend zu verfestigen und die Gebrauchsfähigkeit herzustellen.

Neben solchen direkten Beschichtungen einer Trägerschicht gibt es die so genannte Umkehrbeschichtung oder auch Transferbeschichtung. Hier wird die äußere Schicht zunächst auf ein Trennpapier oder einen ähnlichen (Hilfs-)Träger gebracht, ausgehärtet und in einem zweiten Schritt auf die eigentliche Trägerschicht kaschiert. Anschließend kann nach Trocknung und festem Verbund der Beschichtung zum Textil das Trennpapier abgezogen und mehrfach wieder verwendet werden. Der Vorteil dieses Verfahrens liegt zum einen in der Möglichkeit, über eine Vorprägung des Trennpapiers der äußeren Schicht eine definierte Oberflächenstruktur, etwa eine Narbung zu geben, zum anderen kann der Verbund zum Träger besser gesteuert werden als in der Direktbeschichtung.

Die EP 2 236 662 A1 offenbart ein Verfahren zur Erzeugung einer erhöhten Wasserdampfdurchlässigkeit, bei dem gezielt Blasen in die Beschichtung eingebracht werden durch den Zusatz niedrigsiedender Lösungsmittel, die bei der Folienherstellung schnell verdampfen und so Blasen erzeugen, durch die Wasserdampf transportiert werden kann.

Die US 8 486 209 B2 offenbart ein Verfahren, bei dem durch das schnelle Verdampfen von Wasser beim Aufsprühen einer wässrigen Polymerdispersion auf einen erhitzten Hilfsträger in einem Umkehrbeschichtungsverfahren solche Blasen erzeugt werden.

Bei beiden Ansätzen werden jedoch in einer so großen Anzahl unkontrolliert Blasen erzeugt, dass das resultierende Material zwar eine erhöhte Atmungsaktivität aufweist, jedoch gegenüber einem Dauergebrauch in automobilen Anwendungen nur unzureichend abriebstabil ist.

Die EP 1 279 762 A2 offenbart eine Umkehrbeschichtung zur Herstellung eines atmungsaktiven Kunstleder-Verbundgebildes aus mehreren Schichten. Bei diesem Verfahren wird zunächst ein erstes Schichtmaterial auf ein nur für die Herstellung benötigtes Trägermaterials (Hilfsträger / transfer sheet) aufgebracht. Dieser Hilfsträger ist dabei auf seiner Oberfläche mit Vertiefungen und Erhebungen versehen, also z.B. mit einer bestimmten Prägung versehen. Das erste Schichtmaterial wird nun so aufgebracht, dass nur die Vertiefungen verfüllt werden. Es entsteht damit eine poröse Schicht auf dem Hilfsträger, aus der nur die Erhebungen hervorstehen bzw. nur die erhabenen Stellen nicht von der ersten Schicht bedeckt sind.

Auf diese poröse erste Schicht wird eine zweite Schicht aus einer wässrigen Polyurethanlösung aufgebracht und geschäumt, dass eine poröse, offenporige Schaumschicht entsteht. Dieser so entstandene Schichtverbund wird nach der Trocknung auf eine Trägerschicht laminiert, etwa auf ein gewirktes oder gewobenes Textilmaterial, eventuell gefolgt von weiteren Schichten von porösen Material. Danach wird der Hilfsträger abgezogen.

Die EP 1 887 128 A1 offenbart ein Verfahren nach dem Prinzip der Umkehrbeschichtung zur Herstellung eines atmungsaktiven mehrschichtigen Kunstleders mit einer Trägerschicht aus einem textilen Flächengebilde. Hierbei wird in einem ersten Schritt die Deckschicht auf eine ablösbare Unterlage aufgebracht und nachfolgend mindestens eine Zwischenschicht und eine Trägerschicht auf die Deckschicht aufgelegt. Zur Ausbildung der porösen Deckschicht wird eine wässrige aliphatisch Polyurethandispersion flüssig auf die Unterlage aufgebracht. Unmittelbar nach dem Aufbringen wird der Wassergehalt der Dispersion in so kurzer Zeit verdampft, dass eine verfilmungsfreie Trocknung der Dispersion unter Ausbildung von Mikroporen entsteht.

Um bei den in den beiden letztgenannten Dokumenten offenbarten Verfahren ein ausreichend atmungsaktives mehrschichtiges Kunstleder zu erreichen, müssen die Poren eine Größe von 10 bis 80 µ aufweisen und liegen nachteiliger Weise dann wieder im sichtbaren Bereich.

Für die Erfindung bestand also die Aufgabe, eine verbesserte atmungsaktive Mehrschichtverbundfolie bereitzustellen, die eine hohe Luftdurchlässigkeit und Wasserdampfdurchlässigkeit besitzt, auch eine ausreichende Abriebbeständigkeit auf ihrer Oberfläche aufweist, die sich leicht säubern lässt und auch nach längerem Betrieb nicht ihre Atmungsaktivität verliert. Außerdem bestand die Aufgabe darin, ein Verfahren zur Herstellung einer solchen Folie verfügbar zu machen.

Gelöst wird diese Aufgabe durch die Merkmale des Hauptanspruchs. Weitere vorteilhafte Ausbildungen sind in den Unteransprüchen offenbart. Ebenfalls offenbart ist ein besonders geeignetes Transfer- oder Umkehrbeschichtungsverfahren zur Herstellung einer erfindungsgemäßen Mehrschichtverbundfolie.

Dabei weist die die mit Erhebungen bzw. Narbkuppen und Vertiefungen bzw. Narbtälern versehene Außenschicht der atmungsaktive Mehrschichtverbundfolie im Bereich ihrer Vertiefungen bzw. Narbtäler eine Schichtdicke von maximal 10 µ auf, d.h. die unter der Außenschicht liegende offenporige Schaumschicht ist dort mit einer nur 10 µ dünnen Außenschicht bedeckt. Dieser sehr dünne Materialfilm bewirkt einerseits eine ausreichende Wasserdampfdurchlässigkeit und Luftdurchlässigkeit der Außenschicht, zeigt andererseits aber optisch ein perfektes Aussehen z.B. einer Ledernarbung ohne Perforation und Störstellen. Die Außenschicht wird mit einem Lackauftrag nur auf den Erhebungen bzw. Narbkuppen versehen. Damit lässt sich eine erhöhte Abriebbeständigkeit erreichen, ohne dass die Luft- und Wasserdampfdurchlässigkeit der Außenschicht merkbar beeinflusst wird. Die nun unter der nur auf den Erhebungen bzw. Narbkuppen lackierten Außenschicht/Deckschicht liegende zweite Schicht aus geschäumtem offenzelligen Polyurethan kann damit den Wasserdampf aufnehmen und an die unteren Schichten weiterleiten bzw. durchleiten. Ein solcher Schichtverbund besitzt bei nachträglicher Lackierung eine hohe Abriebbeständigkeit, lässt sich leicht reinigen und behält darüber hinaus seine Atmungsaktivität auch bei lang andauernder Nutzung.

Eine vorteilhafte Weiterbildung besteht darin, dass der Grund der Vertiefungen bzw. Narbtäler eben abgeflacht ist, wobei die Grundebene im Wesentlichen parallel zur Trägerschicht ausgebildet ist. Eine solche Ausbildung vergrößert im Verhältnis zur Gesamtoberfläche die Teile der Oberfläche, hier die Narbtäler, die den oben genannten sehr dünnen Materialfilm aufweisen, der in besonderer Weise luftdurchlässig und wasserdampfdurchlässig ist.

Eine weitere vorteilhafte Ausbildung besteht darin, dass die Außenschicht ein polymeres Material ist aus der Gruppe
a. Polyvinylchlorid-Weichmacher-Mischung,
b. reaktives Polyurethan High-Solid-System,
c. zur Beschichtung in Lösungsmittel gelöste und danach verfestigte Polymere, insbesondere Polyurethane,
d. zur Beschichtung wässrige und danach verfestigte Latices oder Dispersionen, insbesondere Acrylat- oder Polyurethandispersionen.

Durch den Einsatz dieser Materialien kann der Effekt der Wasserdampfdurchlässigkeit in den dafür vorgesehenen Narbtälern, d.h. in den ebenen Grundbereichen der Narbtäler weiter verbessert werden. Der Begriff "reaktives Polyurethan-High-Solid-System" bezeichnet hier ein Gemisch aus Isocyanaten und/oder Isocyanat-Präpolymeren, die wahlweise an den funktionellen Isocyanatgruppen reversibel blockiert sein können, mit Polyolen und/oder Polyaminen. Der Begriff "High-Solid" drückt aus, dass das System maximal 20% eines organischen Lösungsmittels enthält. Katalysatoren und weitere Additive können auch enthalten sein.

Eine weitere vorteilhafte Ausbildung besteht darin, dass die luft- und wasserdampfdurchlässige Schaumschicht eine aufgeschäumte wässrige Dispersion ist, vorzugsweise eine Polyurethandispersion, eine Acrylatdispersion oder auch Gemische hieraus beinhaltet, oder ein mechanisch aufgeschäumtes Polyvinylchlorid (PVC) ist. Solche Schichten besitzen nach ihrer Aushärtung eine für den Anwendungszweck besonders geeignete Luftdurchlässigkeit und Wasserdampfdurchlässigkeit und lassen sich zudem durch einfache Verfahren aufschäumen.

Bei dem besonders geeigneten Verfahren zur Herstellung der erfindungsgemäßen Mehrschichtverbundfolie handelt es sich um ein Transferbeschichtungsverfahren, wobei eine die Außenschicht der fertigen Mehrschichtverbundfolie bildende erste Schicht einer polymeren Paste auf eine Hilfsträgerfolie aufgebracht wird, die auf der Auftragsseite eine aus Erhebungen und Vertiefungen bestehende Struktur oder Narbung aufweist, danach auf die erste Schicht eine zweite Schicht aus einem mechanisch aufschäumbaren Polymer aufgetragen wird, welches nach der Verfestigung eine offenzellige Schaumstruktur aufweist, wobei dann auf die zweite Schicht eine dritte Schicht bzw. Trägerschicht aufgebracht wird, vorzugsweise eine flächige Textilauflage, ein Leder oder Kunstleder, und ggf. weitere luft- und wasserdampfdurchlässige Schichten.

Dabei ist die Höhendifferenz der Erhebungen und Vertiefungen der Struktur oder Narbung über die Fläche des Hilfsträgers im Wesentlichen gleich und die erste Schicht, d.h. die Schicht, die später die Oberseite bzw. Außenschicht der Mehrschichtverbundfolie darstellt, wird so auf den Hilfsträger bzw. die Hilfsträgerfolie aufgebracht, dass die polymere Paste die Vertiefungen der Struktur ausfüllt und die Erhebungen mit einer solchen Schichtdicke bedeckt sind, dass nach der Verfestigung der ersten Schicht deren Schichtdicke über den Erhebungen maximal 10 µ beträgt, d.h. nach Verfestigung der Schicht etwa durch Wärmeeinwirkung im Trockenofen, z.B. PVC-Gelierung, Polyurethanbildung durch Reaktion der reaktiven Bestandteile einer High-Solid-Polyurethanmischung, oder durch Entfernung der flüchtigen Bestandteile durch Trocknen. Nach dem Abziehen des Hilfsträgers bzw. der Hilfsträgerfolie von der Mehrschichtverbundfolie wird die erste Schicht auf ihrer Außenseite mit einem Lackauftrag nur auf den Erhebungen lackiert. Wenn diese Lackierung nur auf den Erhebungen erfolgt, beeinträchtigt der aufgebrachte Lack nicht die Wasserdampfdurchlässigkeit der äußeren Schicht bzw. muss nicht besonders auf Wasserdampfdurchlässigkeit eingestellt werden.

Wenn nach Fertigstellung der gesamten Mehrschichtfolie die Hilfsträgerfolie von dem Verbund abgezogen wird, verbleiben so durch die erfindungsgemäße Verfahrensausbildung auf der äußeren Folie nur sehr dünne Materialschichten über den ehemaligen Erhebungen bzw. Kuppen der Hilfsträgerfolie, d.h. am Grunde der Vertiefungen der nun außen liegenden Folie, jetzt nämlich der Deckfolie.

Wie oben bereits dargestellt, bewirkt dieser sehr dünne Materialfilm einerseits eine ausreichende Wasserdampfdurchlässigkeit und Luftdurchlässigkeit, zeigt andererseits aber optisch ein perfektes Aussehen z.B. einer Ledernarbung ohne Perforation und Störstellen. Die nun unter der nur auf den Erhebungen bzw. Narbkuppen lackierten Außenschicht/Deckschicht liegende zweite Schicht aus geschäumtem offenzelligen Polyurethan kann damit den Wasserdampf aufnehmen und an die unteren Schichten weiterleiten bzw. durchleiten.

Eine vorteilhafte Weiterbildung besteht darin, dass die Struktur oder die Narbung der Hilfsträgerfolie so ausgeformt ist, dass die Erhebungen in Form eines Plateaus abgeflacht sind, wobei die Plateauflächen im Wesentlichen parallel zur Trägerschicht ausgebildet sind. Eine solche Ausbildung vergrößert im Verhältnis zur Gesamtoberfläche die Teile der Oberfläche, die den oben genannten sehr dünnen Materialfilm aufweisen, der in besonderer Weise luftdurchlässig und wasserdampfdurchlässig ist. Die genannte Plateau-Ausbildung führt also dazu, dass die Höhe der Wasserdampfdurchlässigkeit durch die Vorgabe der besonders wasserdampfdurchlässigen Flächen einstellbar und genau auf den Einsatzzweck anpassbar ist.

Eine weitere vorteilhafte Ausbildung besteht darin, dass das Aufbringen der ersten Schicht auf einer Streichwalze erfolgt, an welcher die Hilfsträgerfolie teilweise umlaufend anliegt, wobei eine Zufuhreinrichtung zur Aufgabe der polymeren Paste vorgesehen ist und die polymere Paste nach ihrem Aufbringen mit einer Gegenwalze auf den auf der Streichwalze anliegenden Hilfsträger angedrückt wird, wobei die Oberfläche der Gegenwalze besonders weich ist und vorzugsweise aus Zellgummi, einem schaumartigen Gummi oder Moosgummi besteht. Solche Walzen können beispielsweise aus EPDM, Fluorkautschuk, Chloropren, Naturkautschuk, Silikon-Kautschuk, Nitril-Butadien-Kautschuk, hydriertem Nitril-Kautschuk oder Styrol-Butadien-Kautschuk bestehen und haben in der Regel eine Shore A-Härte von 10 bis 90. Vergleichbare Walzen werden beispielsweise auch im Rotationstampondruck eingesetzt, wobei die dort gebräuchlichen Druckwalzen aus Silikon bestehen und in der Regel eine Shore A-Härte von 30 - 70 besitzen.

Durch ein solches Verfahren, bei dem die polymere Paste der ersten Schicht nach dem Aufbringen durch eine Walze leicht angedrückt wird, lässt sich der dünne Materialfilm auf den Erhebungen der Hilfsträgerfolie exakt einstellen und über die gesamte Bahnenlänge stetig reproduzieren.

Eine weitere vorteilhafte Ausbildung besteht darin, dass als erste Schicht eine polymere Paste aus einem der Materialien
a. Polyvinylchlorid-Weichmacher-Mischung,
b. reaktives Polyurethan High-Solid-System,
c. in Lösungsmittel gelöste Polymere, insbesondere Polyurethane,
d. wässrige Latices oder Dispersionen, insbesondere Acrylat- oder Polyurethandispersionen
auf den Hilfsträger bzw. die Hilfsträgerfolie aufgebracht wird. Wie oben bereits dargestellt, kann durch den Einsatz dieser Materialien der Effekt der Wasserdampfdurchlässigkeit in den dafür vorgesehenen Kuppenbereichen - im fertigen Teil die Narbtäler - weiter verbessert werden und insbesondere auf den einzelnen Anwendungsfall angepasst werden. Zum Begriff "reaktives Polyurethan High-Solid-System" wird hier auf die oben bereits enthaltenen Definitionen verwiesen.

Eine weitere vorteilhafte Ausbildung besteht darin, dass die erste Schicht aufgesprüht wird, wobei die Polymerpaste bzw. das Polymersystem so eingestellt ist, dass das aufgesprühte Schichtmaterial vor der Verfestigung in einem Trockenofen in die Vertiefungen der Struktur oder Narbung einfließt. Ein solches Sprühen erleichtert das Aufbringen der ersten Schicht, vereinfacht somit das Herstellungsverfahren und erlaubt eine relativ kostengünstige Vorrichtung zur Durchführung des Verfahrens.

Eine weitere vorteilhafte Ausbildung besteht darin, dass als zweite Schicht eine mechanisch aufgeschäumte Schicht aufgetragen wird, vorzugsweise eine aufgeschäumte wässrige Dispersionen von Polyurethanen oder Acrylaten oder Mischungen daraus oder ein mechanisch aufgeschäumtes Polyvinylchlorid (PVC). Solche Schichten besitzen nach ihrer Aushärtung eine für den Anwendungszweck besonders geeignete Luftdurchlässigkeit und Wasserdampfdurchlässigkeit und lassen sich zudem in einfachster Weise herstellen und aufschäumen.

Der Begriff "mechanisches Aufschäumen" bezeichnet hier einen Vorgang, bei dem durch mechanische Agitation mit einem Rührer, z.B. mit einem Propellerrührer oder einer Dispergierscheibe, Luft oder ein anderes gasförmiges Medium, wie beispielsweise Stickstoff, in eine flüssige Masse in feinverteilter Form eingetragen wird, so dass die Masse aufgeschäumt wird. In der Regel werden zur flüssigen Masse noch Schaumstabilisierungsmittel zugegeben, damit der so entstandene Schaum auch eine entsprechende Blasenstruktur besitzt und eine gewisse Zeit stabil ist, um verarbeitet zu werden. Polymere Dispersionen werden beispielsweise mit speziellen Schaumaggregaten (z.B. Hansa-Mixer) im industriellen Maßstab aufgeschäumt, aber auch handelsübliche Küchenmixer können verwendet werden.

Eine weitere vorteilhafte Ausbildung besteht darin, dass die dritte Schicht (Trägerschicht) vor der Aushärtung der zweiten aufgeschäumten Schicht in letztere eingelegt wird. Dadurch ergibt sich eine besonders einfache und preiswerte Art der Verbindung zwischen beiden Schichten ohne weitere Zusatzstoffe.

Eine weitere vorteilhafte Ausbildung besteht darin, dass die dritte Schicht nach der Aushärtung der zweiten aufgeschäumten Schicht auf letztere aufkaschiert wird, vorzugsweise mit Hilfe einer weiteren aufgeschäumten Polymerschicht. Ein solches Verfahren bietet Vorteile, wenn ein direktes Einlegen in die zweite Schicht nicht möglich ist bzw. dann, wenn das Verbundmaterial als Halbfertigprodukt zwischengelagert werden soll.

Eine weitere vorteilhafte Ausbildung besteht darin, dass die dritte Schicht nach der Aushärtung der zweiten aufgeschäumten Schicht mit letzterer durch eine nicht-vollflächige Kaschierung verbunden wird, also z.B. durch Verfahren wie web-Kaschierung, Pastenpunktbeschichtung, Pulver-Hotmeltkaschierung, nichtflächige Hotmeltauftragsverfahren mit Walzen oder Düsen usw. Hierdurch lässt sich bei der Kaschierung Klebe- bzw. Verbindungsmaterial einsparen, ohne die Haltbarkeit des Verbundes zu beeinträchtigen.

Eine weitere vorteilhafte Ausbildung besteht darin, dass auch die erste Schicht in gleichem Maße oder weniger aufgeschäumt ist als die zweite Schicht.

Eine weitere vorteilhafte Ausbildung besteht darin, dass mindestens eine der Schichten der atmungsaktiven Mehrschichtverbundfolie mit organischen oder anorganischen Füllstoffen versehen ist, die die Wasserdampfdurchlässigkeit verbessern. Dies ist insbesondere dann der Fall, wenn die Füllstoffe ein Netzwerk bilden, das eine Perkolation erlaubt, in diesem Fall den Durchtritt bzw. das Durchlassen von Wasserdanpf, oder wenn etwa die Füllstoffe wasserdampfdurchlässige Kanäle senkrecht zu den Verbundlagen bilden.

Das erfindungsgemäße Verfahren zur Herstellung einer Mehrschichtverbundfolie kann auch mit bekannten Verfahren kombiniert werden, z. B. dadurch, dass der Verbund nach Fertigstellung zur Verbesserung der Wasserdampfdurchlässigkeit zusätzlich sichtbar perforiert, mikroperforiert, d.h. so perforiert, dass die Perforation mit bloßem Auge weitestgehend unsichtbar ist oder auch mono- oder bidirektional verstreckt wird.

In eben diesem Sinne ist es ggf. vorteilhaft, wenn eine oder mehrere Schichten bzw. Verbundlagen bei zu hohen Temperaturen getrocknet werden, so dass Wasser oder Lösungsmittel sehr schnell verdampfen und so größere Fehlstellen oder Blasen in den Verbundlagen entstehen, die positiv für einen verbesserten Wasserdampfdurchgang sind.

Ein großes Potential bei der weiteren Verbesserung der Atmungsaktivität besteht eben darin, dass das Narbdesign so gewählt wird, dass nach dem oben beschriebenen Verfahren die erste Deckschicht zumindestens an einigen Stellen nur sehr dünn ist. Das kann beispielsweise durch viele zur Verbundlage parallele außenliegenden Narbstrukturen erfolgen. Idealerweise liegen diese "Dünnstellen" im fertigen Verbund in den Narbtälern, die nicht oder nur wenig mechanischen Abriebbelastungen ausgesetzt sind.
Auch die Lackierung, die insbesondere für automobile Anwendungen notwendig ist, wird so ausgeführt werden wie oben beschrieben, dass nämlich die Narbkuppen im fertigen Verbund lackiert werden. Vorteilhaft ist es auch, die Schaumdichte des offenzelligen Schaums möglich gering zu halten, um eine weiche Griffigkeit, das heißt eine angenehme Haptik zu erzeugen.

Es kann auch von Vorteil sein, dass der Verbund so aufgebaut ist, dass die Schaumdichten ausgehend von der Deckschicht bis zur Kaschierschicht des Textils oder Leders abnehmen, so dass Wasserdampf besonders gut von der Deckschicht bis zum Textil transportiert wird. Vorteilhaft kann es auch sein, dass als Träger besonders luftdurchlässige oder wasserdampfdurchlässige Schäume, Textilien oder Leder verwendet werden wie Abstandsgewirke, Vliese, Gestricke, Gewirke, offenzellige Polyurethanschäume etc.

Die erfindungsgemäße hergestellte Mehrschichtverbundfolie lässt sich in besonders vorteilhafter Weise als Bezug für Fahrzeugsitze oder für Sitze in Verkehrsmitteln, auch als Möbelbezug oder als Bezug für medizinische und therapeutische Liege- und Sitzmöbel verwenden. In all diesen Bereichen besonders gefragt ist nämlich ein atmungsaktiver Bezugsstoff, der luft- und wasserdampfdurchlässig ist und somit ein angenehmes Körpergefühl vermittelt.

Die erfindungsgemäße Mehrschichtverbundfolie kann zusätzlich mit diversen klimatisierenden Bauelementen, wie z. b. Heizelementen oder Peltierelementen kombiniert werden, um das Klimamanagement im Verbundgebilde zu verbessern.

Zusammenfassend wird mit der erfindungsgemäßen Mehrschichtverbundfolie ein flexibles und abriebstabiles Verbundgebilde bzw. Laminat bereitgestellt mit zumindest einer oberen licht- und alterungsstabilen Polymerschicht, dass sich durch eine zum Stand der Technik erhöhte Wasserdampf- und Luftdurchlässigkeit auszeichnet. Dieses Verbundgebilde ist insbesondere in Bereichen gut einsetzbar, die mit der bekleideten oder unbekleideten menschlichen Haut in Kontakt kommen wie z.B. auf Sitz- oder Rückenlehnflächen. Hier stellt die idealerweise als Kunstleder ausgeführte Mehrschichtverbundfolie im Vergleich zu standardmäßig im Sitzbereich eingesetzten Kunstledern wesentlich angenehmeres Klima- und damit Sitzkomfort bereit, wenn der Benutzer längere Zeit auf diesen Flächen sitzt oder diese berührt. Die Mehrschichtverbundfolie kann insbesondere als Bezug für Fahrzeugsitze oder für Sitze in Verkehrsmitteln alternativ zu herkömmlichen Sitzpolstermaterialien im Automobilinnenraum eingesetzt werden und erfüllt im übrigen alle wesentlichen Forderungen der Automobilhersteller an die technischen Eigenschaften eines solchen Materials. Die erfindungsgemäß hergestellt Mehrschichtverbundfolie ist aus denselben Gründen ebenso vorteilhaft als Möbelbezug verwendbar oder als Bezug für medizinische und therapeutische Liege- und Sitzmöbel. Dasselbe gilt für die Verwendung der erfindungsgemäß hergestellten Mehrschichtverbundfolie als Bekleidungsstoff oder Material für Schuhwerk.

Anhand eines Ausführungsbeispiels soll die Erfindung näher erläutert werden. Es zeigen
- Fig. 1: in Form einer Prinzipskizze ein Ausführungsbeispiel einer erfindungsgemäßen atmungsaktiven Mehrschichtverbundfolie,
- Fig. 2: prinzipiell das beanspruchte Verfahren zur Herstellung einer erfindungsgemäßen atmungsaktiven Mehrschichtverbundfolie gemäß Fig. 1.

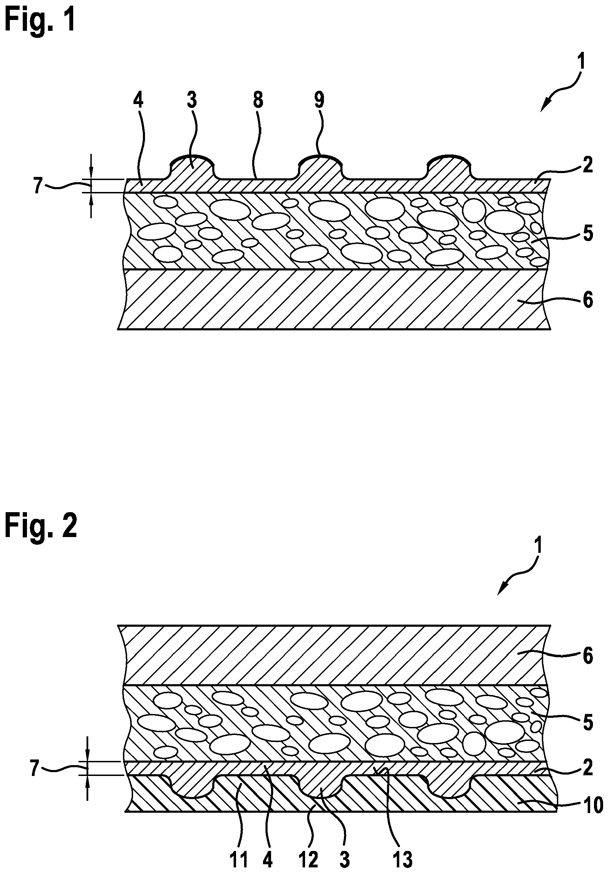

Die Fig. 1 zeigt in Form einer Prinzipskizze ein Ausführungsbeispiel einer erfindungsgemäßen atmungsaktiven Mehrschichtverbundfolie 1 im Schnitt.

Die Mehrschichtverbundfolie weist eine mit einer Struktur oder Narbung versehene Außenschicht 2 auf, in der Erhebungen bzw. Narbkuppen 3 und Vertiefungen bzw. Narbtäler 4 vorhanden sind.

Unter der Außenschicht 2 ist eine luft- und wasserdampfdurchlässige Schaumschicht 5 mit einer offenzelligen Schaumstruktur vorgesehen. Unter der Schaumschicht 5 wiederum ist eine luft- und wasserdampfdurchlässige Textil-Trägerschicht 6 angeordnet.

Die Außenschicht 2 weist im Bereich ihrer Vertiefungen bzw. Narbtäler 4 eine Schichtdicke 7 von 8µ, als 0,008 mm auf. Der Grund der Vertiefungen bzw. Narbtäler 4 ist dabei eben abgeflacht ist, wobei die Grundebene 8 im Wesentlichen parallel zur Trägerschicht 6 ausgerichtet ist.

Die Außenschicht 2 ist mit einer Lackierung 9 versehen, die jedoch nur die jeweiligen Narbkuppen 3 bedeckt und in den Narbtälern 4 nicht vorhanden ist.

Die Fig. 2 verdeutlicht prinzipiell das ebenfalls beanspruchte Verfahren zur Herstellung einer erfindungsgemäßen atmungsaktiven Mehrschichtverbundfolie 1. Die einzelnen Schichtlagen sind auch hier im Schnitt dargestellt.

Es handelt sich hier um ein so genanntes Umkehr- oder Transferbeschichtungsverfahren, bei dem zunächst die äußere Schicht auf eine Hilfsträgerfolie aufgebracht und dann in weiteren Schritten mit weiteren Schichten und der letztlich aufgebrachten Trägerschicht verbunden wird. Nach dem Abziehen der Hilfsträgerfolie wird dann der Schichtverbund umgedreht und auf den zu beschichtenden oder mit einem entsprechenden Bezug zu versehenden Gegenstand aufgebracht. Dann ist die im Umkehr- oder Transferbeschichtungsverfahren zuerst aufgebrachte Schicht auf der Außenseite.

In diesem Beispiel für die Ausführung des Verfahrens wird zunächst die die Außenschicht der fertigen Mehrschichtverbundfolie bildende erste Schicht 2 einer polymeren Paste auf eine Hilfsträgerfolie 10 aufgebracht. Die Hilfsträgerfolie 10 weist auf ihrer Auftragsseite eine aus Erhebungen und Vertiefungen bestehende Struktur oder Narbung auf, wobei hier die Hilfsträgerfolie 10 als Negativform ausgebildet ist, so dass deren Erhebungen 11 die Vertiefungen 4 der späteren Außenschicht 2 formen, während die Vertiefungen 12 der Hilfsträgerfolie 10 die Narbkuppen 3 der späteren Außenschicht 2 ausbilden.

Die Struktur oder Narbung des Hilfsträgers 10 ist dabei so ausgebildet, dass die Erhebungen 11 in Form eines Plateaus abgeflacht sind, wobei die Plateauflächen 13 im Wesentlichen parallel zur später aufgebrachten Trägerschicht 6 ausgebildet sind

Auf die erste Schicht, d.h. die spätere Außenschicht 2, wird dann eine zweite Schicht 5 aus einem mechanisch aufschäumbaren Polymer aufgetragen wird, welches nach der Verfestigung eine offenzellige Schaumstruktur aufweist.

Auf diese zweite Schicht wird dann eine dritte Schicht, nämlich die Trägerschicht aufgebracht, hier eine flächige Textil-Trägerschicht 6. Die Textil-Trägerschicht 6 ist hier aufkaschiert und so mithilfe eines nicht vollflächig, sondern in engen Gitterlinien aufgetragen, hier jedoch nicht näher dargestellten Klebers mit der Schaumschicht verbunden.

Die Höhendifferenz der Erhebungen 11 und Vertiefungen 12 des Hilfsträgers ist im Wesentlichen über die gesamte Fläche gleich, so dass die erste Schicht 2 so auf die Hilfsträgerfolie aufgebracht werden kann, dass die polymere Paste die Vertiefungen der Struktur ausfüllt und die Erhebungen mit einer Schichtdicke 7 bedeckt, die hier über den Erhebungen 11 auch nach Trocknung 8 µ beträgt.

Nachdem die Hilfsträgerfolie abgezogen ist, kann die Oberfläche der dann zur Außenschicht 2 werdenden im Verfahren zuerst aufgebrachten Schicht so lackiert werden, dass nur deren Kuppen 3 eine Lackschicht tragen.

### Bezugszeichenliste (Teil der Beschreibung)

- 1: atmungsaktiven Mehrschichtverbundfolie
- 2: Außenschicht, zuerst aufgetragene Schicht
- 3: Erhebung bzw. Narbkuppe der Außenschicht
- 4: Vertiefung bzw. Narbtal der Außenschicht
- 5: Schaumschicht aus offenzelligem, offenporigen Schaum
- 6: Textil-Trägerschicht
- 7: Schichtdicke der Außenschicht im Bereich einer Vertiefung/eines Narbtals
- 8: Grundebene
- 9: Lackierung
- 10: Hilfsträgerfolie
- 11: Erhebung der Hilfsträgerfolie (Negativ des Narbtals)
- 12: Vertiefung der Hilfsträgerfolie (Negativ der Narbkuppe)
- 13: Plateaufläche (Negativ der Grundebene)

## Patentansprüche

1. Atmungsaktive Mehrschichtverbundfolie (1), die folgende Schichten aufweist
a. eine mit einer Struktur oder Narbung versehene Außenschicht (2), die Erhebungen bzw. Narbkuppen (3) und Vertiefungen bzw. Narbtäler (4) aufweist,
b. mindestens eine darunterliegende luft- und wasserdampfdurchlässige Schaumschicht (5) mit einer offenzelligen Schaumstruktur,
c. eine unter der Schaumschicht (5) angeordnete luft- und wasserdampfdurchlässige Trägerschicht (6), vorzugsweise eine Textilschicht, ein Leder oder eine Kunstlederschicht,
sowie ggf. weitere innerhalb des Schichtverbundes angeordnete luft- und wasserdampfdurchlässige Schichten, wobei die mit Erhebungen bzw. Narbkuppen (3) und Vertiefungen bzw. Narbtälern (4) versehene Außenschicht (2) im Bereich ihrer Vertiefungen bzw. Narbtäler (4) eine Schichtdicke (7) von maximal 10 µm aufweist, **dadurch gekennzeichnet, dass** nur die Erhebungen bzw. Narbkuppen (3) mit einem Lackauftrag (9) versehen sind.

2. Mehrschichtverbundfolie nach Anspruch 1, bei der der Grund der Vertiefungen bzw. Narbtäler (4) eben abgeflacht ist, wobei die Grundebene (8) im Wesentlichen parallel zur Trägerschicht (6) ausgebildet ist.

3. Mehrschichtverbundfolie nach Anspruch 1 oder 2, bei der die Außenschicht (2) ein polymeres Material ist aus der Gruppe
a. Polyvinylchlorid-Weichmacher-Mischung,
b. reaktives Polyurethan High-Solid-System,
c. zur Beschichtung in Lösungsmittel gelöste und danach verfestigte Polymere, insbesondere Polyurethane,
d. zur Beschichtung wässrige und danach verfestigte Latices oder Dispersionen, insbesondere Acrylat- oder Polyurethandispersionen.

4. Mehrschichtverbundfolie nach einem der Ansprüche 1 bis 3, bei der die luft- und wasserdampfdurchlässige Schaumschicht (5) eine aufgeschäumte wässrige Dispersion ist, vorzugsweise eine Polyurethandispersion, eine Acrylatdispersion oder auch Gemische hieraus beinhaltet, oder ein mechanisch aufgeschäumtes Polyvinylchlorid (PVC) ist.

5. Verfahren zur Herstellung einer atmungsaktiven Mehrschichtverbundfolie (1) nach Anspruch 1 bis 4 im Transferbeschichtungsverfahren, wobei eine die Außenschicht (2) der fertigen Mehrschichtverbundfolie bildende erste Schicht einer polymeren Paste auf eine Hilfsträgerfolie (10) aufgebracht wird, die auf ihrer Auftragsseite eine aus Erhebungen (11) und Vertiefungen (12) bestehende Struktur oder Narbung aufweist, wonach die erste Schicht getrocknet wird und auf die erste Schicht eine zweite Schicht (5) aus einem mechanisch aufschäumbaren Polymer aufgetragen wird, welches nach der Verfestigung eine offenzellige Schaumstruktur aufweist, wobei dann auf die zweite Schicht eine dritte Schicht bzw. Trägerschicht (6) aufgebracht wird, vorzugsweise eine flächige Textilauflage, ein Leder oder Kunstleder, und ggf. weitere luft- und wasserdampfdurchlässige Schichten, wobei die Höhendifferenz der Erhebungen (11) und Vertiefungen (12) der Struktur oder Narbung über die Fläche der Hilfsträgerfolie (10) im Wesentlichen gleich ist und dass die erste Schicht (2) so auf die Hilfsträgerfolie (10) aufgebracht wird, dass die polymere Paste die Vertiefungen der Struktur ausfüllt und die Erhebungen (11) mit einer solchen Schichtdicke bedeckt sind, dass nach der Verfestigung der ersten Schicht deren Schichtdicke über den Erhebungen maximal 10 µm beträgt, wobei die Verfestigung der Schicht durch Wärmeeinwirkung im Trockenofen oder durch Entfernung der flüchtigen Bestandteile durch Trocknen erfolgt, **dadurch gekennzeichnet, dass** nach dem Abziehen der Hilfsträgerfolie (10) von der Mehrschichtverbundfolie die erste Schicht (2) auf ihrer Außenseite mit einem Lackauftrag (9) nur auf den Erhebungen lackiert wird.

6. Verfahren nach Anspruch 5, bei dem Struktur oder Narbung der Hilfsträgerfolie (10) so ausgeformt ist, dass die Erhebungen in Form eines Plateaus abgeflacht sind, wobei die Plateauflächen (13) im Wesentlichen parallel zur Trägerschicht (6) ausgebildet sind.

7. Verfahren nach Anspruch 5 oder 6, bei dem das Aufbringen der ersten Schicht (2) auf einer Streichwalze erfolgt, an welcher die Hilfsträgerfolie teilweise umlaufend anliegt, wobei eine Zufuhreinrichtung zur Aufgabe der polymeren Paste vorgesehen ist und die polymere Paste nach ihrem Aufbringen mit einer Gegenwalze auf den auf der Streichwalze anliegenden Hilfsträger angedrückt wird, wobei die Oberfläche der Gegenwalze aus Zellgummi, einem schaumartigen Gummi oder Moosgummi besteht und eine Shore A-Härte von 10 bis 90 aufweist.

8. Verfahren nach einem der Ansprüche 5 bis 7, bei dem als erste Schicht (2) eine polymere Paste aus einem der Materialien
a. Polyvinylchlorid-Weichmacher-Mischung,
b. reaktives Polyurethan High-Solid-System,
c. in Lösungsmittel gelöste Polymere, insbesondere Polyurethane,
d. wässrige Latices oder Dispersionen, insbesondere Acrylat- oder Polyurethandispersionen
auf die Hilfsträgerfolie (10) aufgebracht wird.

9. Verfahren nach einem der Ansprüche 5 bis 8, bei dem die erste Schicht (2) aufgesprüht wird, wobei die Polymerpaste bzw. das Polymersystem so eingestellt ist, dass das aufgesprühte Schichtmaterial vor der Verfestigung in einem Trockenofen in die Vertiefungen der Struktur oder Narbung einfließt.

10. Verfahren nach einem der Ansprüche 5 bis 9, bei dem als zweite Schicht (5) eine mechanisch aufgeschäumte Schicht aufgetragen wird, vorzugsweise eine aufgeschäumte wässrige Dispersionen von Polyurethanen oder Acrylaten oder Mischungen daraus oder ein mechanisch aufgeschäumtes Polyvinylchlorid (PVC).

11. Verfahren nach einem der Ansprüche 5 bis 10, bei dem die dritte Schicht (6) vor der Aushärtung der zweiten aufgeschäumten Schicht in letztere eingelegt wird.

12. Verfahren nach einem der Ansprüche 5 bis 10, bei dem die dritte Schicht (6) nach der Aushärtung der zweiten aufgeschäumten Schicht auf letztere aufkaschiert wird, vorzugsweise mit Hilfe einer weiteren aufgeschäumten Polymerschicht.

13. Verfahren nach Anspruch 12, bei dem die dritte Schicht (6) nach der Aushärtung der zweiten aufgeschäumten Schicht mit letzterer durch eine nicht-vollflächige Kaschierung verbunden wird.

## Claims

1. Breathable multilayer composite film (1) comprising layers as follows:
a. a structured or grained outer layer (2), comprising elevations, or grain peaks (3), and depressions, or grain valleys (4),
b. at least one air-permeable and water vapour-permeable foam layer (5) beneath, having an open-celled foam structure,
c. an air-permeable and water vapour-permeable carrier layer (6) arranged under the foam layer (5), preferably a textile layer, a leather or a synthetic leather layer, and also possibly further air-permeable and water vapour-permeable layers arranged within the layer composite, wherein the outer layer (2) provided with elevations or grain peaks (3) and with depressions or grain valleys (4) has a layer thickness (7), in the region of its depressions or grain valleys (4), of not more than 10 µm, **characterized in that** only the elevations or grain peaks (3) have been provided with an application (9) of varnish.

2. Multilayer composite film according to Claim 1, in which the base of the depressions or grain valleys (4) has planar flattening, wherein the base plane (8) is developed substantially parallel to the carrier layer (6).

3. Multilayer composite film according to Claim 1 or 2, in which the outer layer (2) is a polymeric material from the group of
a. polyvinyl chloride/plasticizer mixture,
b. reactive polyurethane high-solids system,
c. polymers, more particularly polyurethanes, dissolved in solvent for coating and thereafter solidified,
d. latices or dispersions, more particularly acrylate or polyurethane dispersions, which are aqueous for coating and thereafter solidified.

4. Multilayer composite film according to any of Claims 1 to 3, in which the air-permeable and water vapour-permeable foam layer (5) is a foamed aqueous dispersion, preferably constituting a polyurethane dispersion, an acrylate dispersion or else mixtures thereof, or is a mechanically foamed polyvinyl chloride (PVC).

5. Process for producing a breathable multilayer composite film (1) according to Claim 1 to 4 by a transfer coating process, wherein a first layer of a polymeric paste, forming the outer layer (2) of the completed multilayer composite film, is applied to an auxiliary carrier film (10) which on its application side comprises a grain or structure consisting of elevations (11) and depressions (12), after which the first layer is dried and a second layer (5) composed of a mechanically foamable polymer is applied to the first layer and, after solidification, has an open-celled foam structure, wherein a third layer or carrier layer (6) is then applied to the second layer, preferably a sheetlike textile overlay, a leather or synthetic leather, and optionally further air-permeable and water vapour-permeable layers, wherein the height difference of the elevations (11) and depressions (12) of the structure or grain is substantially the same over the area of the auxiliary carrier film (10), and the first layer (2) is applied to the auxiliary carrier film (10) such that the polymeric paste fills in the depressions of the structure and the elevations (11) are covered with a layer thickness such that after the solidification of the first layer, the layer thickness thereof over the elevations is not more than 10 µm, wherein the layer is solidified by exposure to heat in a drying oven or by removal of the volatile constituents by drying, **characterized in that**, after the auxiliary carrier film (10) has been peeled off from the multilayer composite film, the first layer (2) on its outer side is varnished with an application (9) of varnish only on the elevations.

6. Process according to Claim 5, in which the structure or grain of the auxiliary carrier film (10) is shaped such that the elevations are flattened in the form of a plateau, wherein the plateau areas (13) are developed substantially parallel to the carrier layer (6).

7. Process according to Claim 5 or 6, in which the first layer (2) is applied to a coating roll against which the auxiliary carrier film lies with partial encirclement, wherein a supply facility is provided for feeding the polymeric paste and, after it has been applied, the polymeric paste is pressed with an opposed roll onto the auxiliary carrier lying against the coating roll, wherein the surface of the opposed roll consists of cellular rubber, a foam like rubber or microcellular rubber and has a Shore A hardness of 10 to 90.

8. Process according to any of Claims 5 to 7, in which as first layer (2) a polymeric paste composed of one of the following materials:
a. polyvinyl chloride/plasticizer mixture,
b. reactive polyurethane high-solids system,
c. polymers, more particularly polyurethanes, dissolved in solvent,
d. aqueous latices or dispersions, more particularly acrylate or polyurethane dispersions
is applied to the auxiliary carrier film (10).

9. Process according to any of Claims 5 to 8, in which the first layer (2) is sprayed on, wherein the polymer paste or polymer system is formulated such that the layer material sprayed on flows into the depressions of the structure or grain before solidification in a drying oven.

10. Process according to any of Claims 5 to 9, in which as second layer (5) a mechanically foamed layer is applied, preferably a foamed aqueous dispersion of polyurethanes or acrylates or mixtures thereof, or a mechanically foamed polyvinyl chloride (PVC).

11. Process according to any of Claims 5 to 10, in which the third layer (6) is laid into the second, foamed layer before the latter is cured.

12. Process according to any of Claims 5 to 10, in which the third layer (6) is laminated, preferably by means of a further foamed polymer layer, onto the second, foamed layer after the latter has been cured.

13. Process according to Claim 12, in which the third layer (6) is joined by lamination not over the full area to the second, foamed layer after the latter has been cured.

## Revendications

1. Feuille composite multicouche respirante (1), qui présente les couches suivantes
a. une couche externe (2) pourvue d'une structure ou d'un grainage, qui présente des élévations ou, selon le cas, des calottes de grainage (3) et des renfoncements ou, selon le cas, des creux de grainage (4),
b. au moins une couche de mousse (5) sous-jacente, perméable à l'air et à la vapeur d'eau, présentant une structure de mousse à pores ouverts,
c. une couche support (6) perméable à l'air et à la vapeur d'eau, agencée sous la couche de mousse (5), de préférence une couche textile, un cuir ou une couche de cuir synthétique,
ainsi que le cas échéant d'autres couches perméables à l'air et à la vapeur d'eau, agencées au sein du composite stratifié, la couche externe (2) pourvue des élévations ou, selon le cas, des calottes de grainage (3) et des renfoncements ou, selon le cas, des creux de grainage (4) présentant, au niveau de ses renfoncements ou, selon le cas, de ses creux de grainage (4), une épaisseur de couche (7) d'au maximum 10 µm, **caractérisée en ce que** seules les élévations ou, selon le cas, les calottes de grainage (3) sont pourvues d'un revêtement de vernis (9).

2. Feuille composite multicouche selon la revendication 1, dans laquelle le fond des renfoncements ou, selon le cas, des creux de grainage (4) est aplani de manière uniforme, le plan de base (8) étant conçu de manière sensiblement parallèle à la couche support (6).

3. Feuille composite multicouche selon la revendication 1 ou 2, dans laquelle la couche externe (2) est un matériau polymère du groupe constitué par
a. un mélange de poly(chlorure de vinyle) et de plastifiant,
b. un système réactif de polyuréthane à teneur élevée en solides,
c. des polymères, en particulier des polyuréthanes, dissous dans un solvant pour le revêtement et ensuite solidifiés,
d. des latex ou des dispersions, en particulier des dispersions d'acrylate ou de polyuréthane, aqueux pour le revêtement et ensuite durcis.

4. Feuille composite multicouche selon l'une des revendications 1 à 3, dans laquelle la couche de mousse (5) perméable à l'air et à la vapeur d'eau est une dispersion aqueuse moussée, de préférence comporte une dispersion de polyuréthane, une dispersion d'acrylate ou également des mélanges de celles-ci, ou est un poly(chlorure de vinyle) (PVC) moussé mécaniquement.

5. Procédé pour la préparation d'une feuille composite multicouche (1) respirante selon la revendication 1 à 4 dans un procédé de revêtement par transfert, une première couche d'une pâte polymère, formant la couche externe (2) de la feuille composite multicouche finie, étant appliquée sur une feuille support auxiliaire (10), qui présente sur sa face d'application une structure ou un grainage constitué par des élévations (11) et des renfoncements (12), suite à quoi la première couche est séchée et une deuxième couche (5) constituée par un polymère moussable mécaniquement est appliquée sur la première couche, lequel polymère présente, après la solidification, une structure de mousse à pores ouverts, une troisième couche ou, selon le cas, une couche support (6) étant ensuite appliquée sur la deuxième couche, de préférence un revêtement textile plat, un cuir ou un cuir synthétique, et le cas échéant d'autres couches perméables à l'air ou à la vapeur d'eau, la différence de hauteur entre les élévations (11) et les renfoncements (12) de la structure ou du grainage sur la surface de la feuille support auxiliaire (10) étant sensiblement identique et la première couche (2) étant appliquée sur la feuille support auxiliaire (10) de manière telle que la pâte polymère remplit les renfoncements de la structure et les élévations (11) sont recouvertes par une épaisseur de couche telle qu'après la solidification de la première couche, son épaisseur de couche au-dessus des élévations représente au maximum 10 µm, la solidification de la couche ayant lieu par effet de chaleur dans un four de séchage ou par élimination des constituants volatils par séchage, **caractérisé en ce qu'**après retrait de la feuille support auxiliaire (10) de la feuille composite multicouche, la première couche (2) est vernie sur sa face externe, uniquement sur les élévations, par un revêtement de vernis (9).

6. Procédé selon la revendication 5, dans lequel la structure ou le grainage de la feuille support auxiliaire (10) est façonné(e) de manière telle que les élévations sont aplaties sous forme d'un plateau, les surfaces du plateau (13) étant conçues de manière sensiblement parallèle à la couche support (6).

7. Procédé selon la revendication 5 ou 6, dans lequel l'application de la première couche (2) est effectuée sur un rouleau d'enduction, sur lequel la feuille support auxiliaire est placée en partie de manière périphérique, un dispositif d'alimentation pour l'application de la pâte polymère étant prévu et la pâte polymère étant pressée, après son application, à l'aide d'un contre-rouleau sur le support auxiliaire placé sur le rouleau d'enduction, la surface du contre-rouleau étant constituée par un caoutchouc cellulaire, un caoutchouc de type mousse ou une mousse de caoutchouc et présentant une dureté Shore A de 10 à 90.

8. Procédé selon l'une des revendications 5 à 7, dans lequel on applique, comme première couche (2), une pâte polymère constituée par l'un des matériaux
a. un mélange de poly(chlorure de vinyle) et de plastifiant,
b. un système réactif de polyuréthane à teneur élevée en solides,
c. des polymères, en particulier des polyuréthanes, dissous dans un solvant,
d. des latex ou des dispersions aqueux, en particulier des dispersions d'acrylate ou de polyuréthane
sur la feuille support auxiliaire (10).

9. Procédé selon l'une des revendications 5 à 8, dans lequel la première couche (2) est pulvérisée, la pâte polymère ou, selon le cas, le système polymère étant réglé(e) de manière telle que le matériau de couche pulvérisé s'écoule dans les renfoncements de la structure ou du grainage avant la solidification dans un four de séchage.

10. Procédé selon l'une des revendications 5 à 9, dans lequel on applique, comme deuxième couche (5), une couche moussée mécaniquement, de préférence une dispersion aqueuse moussée de polyuréthanes ou d'acrylates ou de leurs mélanges, ou un poly(chlorure de vinyle) (PVC) moussé mécaniquement.

11. Procédé selon l'une des revendications 5 à 10, dans lequel la troisième couche (6) est incorporée dans la deuxième couche moussée avant le durcissement de cette dernière.

12. Procédé selon l'une des revendications 5 à 10, dans lequel la troisième couche (6) est contrecollée, de préférence à l'aide d'une autre couche polymère moussée, sur la deuxième couche moussée après le durcissement de cette dernière.

13. Procédé selon la revendication 12, dans lequel la troisième couche (6) est reliée, par un contrecollage sur une partie incomplète de la surface, à la deuxième couche moussée après le durcissement de cette dernière.
